# FASCICULE DE BREVET EUROPEEN

(11) **EP 2 535 513 B1**
(45) Date de publication et mention de la délivrance du brevet: **26.02.2014**
(21) Numéro de dépôt: 11170454.0
(22) Date de dépôt: 17.06.2011
(51) Int. Cl.: F01D 5/06, F01D 5/30, F01D 5/34, B23K 20/12

(54) **Procédé de soudage par friction d'aubes à un rotor de turbomachine axiale générant des contraintes de compression aux bords de fuite et d'attaque des aubes et rotor correspondant**
Reibschweißverfahren von Laufradschaufeln für einen Rotor einer axialen Strömungsmaschine, das an den Vorder- und Hinterkanten der Laufradschaufeln Druckbeanspruchungen erzeugt, und entsprechender Rotor
Method for friction soldering blades to the rotor of an axial turbomachine, generating compression stresses on the leading and trailing edges of the blades, and corresponding rotor

(43) Date de publication de la demande: 19.12.2012
(73) Titulaire: Techspace Aero S.A., 4041 Herstal (Milmort) (BE)
(72) Inventeur: Durieu, François, 5370 Havelange (BE); Wlasowski, Michel, 4800 Verviers (BE)
(74) Mandataire: Lecomte, Didier

(56) Documents cités:
- EP-A1- 2 204 541
- EP-A2- 1 000 695
- US-A- 5 813 593

## Description

### Domaine technique

L'invention a trait à un procédé de soudage par friction d'aubes à un rotor de turbomachine axiale, plus particulièrement à un tambour de compresseur. L'invention a trait également à un rotor de turbomachine axiale, plus particulièrement à un tambour de compresseur correspondant.

### Technique antérieure

Le soudage par friction est un procédé de soudage mécanique où la chaleur nécessaire pour le soudage est fournie en frottant l'une contre l'autre les pièces à assembler sous une pression axiale dite de forgeage.

Le document de brevet EP 2 281 653 A1 divulgue une méthode de soudage par friction d'aubes à un disque de ventilateur ou « fan » à l'entrée d'une turbomachine axiale. En référence au document de brevet W02008/017800, cet enseignement s'intéresse au problème de manque de contrôle de la pression de forgeage aux extrémités de l'interface entre les pièces à souder lorsque la section de matière sous l'interface diminue selon un angle trop important. Le procédé décrit a pour particularité de prévoir une première zone sous l'interface sans diminution de section suivie ensuite d'une deuxième zone avec un retrait progressif de matière. Le procédé de soudage qui y est décrit en relation avec l'exemple de réalisation est un procédé de soudage par friction linéaire. Il prévoit qu'un soudage par friction orbitale peut également être appliqué sans pour autant en préciser les conditions d'application. Cet enseignement se limite à tenter de résoudre des problèmes de qualité de liaison qui sont spécifiquement liés au procédé de soudage utilisé. En effet, la géométrie proposée pour la zone du rotor destinée à recevoir l'aube et pour l'aube proprement dite consiste essentiellement en des surplus de matière aux extrémités, ces surplus devant ensuite être enlevés par usinage. La solution proposée dans ce document ne propose en soi pas d'amélioration notoire de la fixation des aubes au rotor.

Le document de brevet US 2003/0201305 A1 divulgue un dispositif de soudage par friction pour la fixation notamment d'aubes à un rotor. Le principe de soudage divulgué dans ce document est basé sur la friction linéaire et exploite un dispositif initialement prévu pour du soudage linéaire, à savoir apte à imprimer un mouvement de va-et-vient à une pièce à souder par rapport au substrat auquel elle est destinée à être soudée. Le mouvement de la pièce à souder, en l'occurrence l'aube, est guidé de manière à décrire un trajet courbe correspondant essentiellement au profil de l'aube selon une section transversale. L'objectif de cette trajectoire courbe est d'éviter qu'une partie de la surface de contact de l'aube avec le rotor ne soit découverte lors de la friction et subisse un contact direct avec l'air ambiant et un refroidissement non contrôlé. Cette solution est par conséquent particulièrement adaptée aux aubes à forte courbure. Ce procédé requiert cependant un équipement lourd et coûteux notamment en raison de l'application de soudage à friction linéaire. En effet, les mouvements alternatifs de va-et-vient de la pièce à souder sont particulièrement contraignants notamment au niveau de l'équipement qui va assurer le mouvement de la pièce. Tout comme pour le document discuté précédemment, la solution de cet enseignement ne propose en soi pas d'amélioration notoire de la fixation des aubes au rotor.

Le document de brevet EP 1 000 695 A2 divulgue un procédé de soudage par friction d'aubes à un rotor de turbomachine axiale, conforme au préambule de la revendication 1. Il divulgue également un rotor de turbomachine axiale, conforme au préambule de la revendication 13.

### Résumé de l'invention

### Problème technique

L'invention a pour objectif de proposer une solution d'amélioration de la liaison des aubes à un rotor, plus particulièrement dans un objectif de réduction des risques de naissance et propagation de fissures au bord d'attaque et au bord de fuite des aubes.

### Solution technique

L'invention a pour objet un procédé de soudage par friction d'aubes à un rotor de turbomachine axiale, comprenant les étapes suivantes: (a) mise en position du rotor; (b) mise en mouvement de friction, préférentiellement orbital, d'une des aubes contre une zone du rotor destinée à recevoir ladite aube, de manière à atteindre une température de soudage ; (c) immobilisation de l'aube par rapport au rotor et forgeage de l'aube contre le rotor de manière à obtenir un joint de liaison entre l'aube et le rotor; remarquable en ce que le rotor est un tambour ou un étage de tambour comprenant une paroi définissant un volume intérieur creux, et les étapes (b) et (c) sont menées avec la présence d'un support sur une surface interne du rotor opposée à la zone de réception de l'aube, la longueur de la surface de contact du support avec la surface interne du rotor suivant l'axe de rotation du rotor étant inférieure à la longueur de la zone de réception de l'aube, de manière à générer après refroidissement et relâchement de la pression une concentration de contrainte de compression au coeur de l'épaisseur du joint de liaison à au moins une extrémité axiale.

Le support est indépendant du rotor. Il s'agit préférentiellement d'un élément d'outillage mis en contact avec la surface interne du rotor et maintenu de manière rigide et immobile par rapport au rotor. Le support prend préférentiellement appui sur un bâti de machine assurant l'opération de soudage.

Les contraintes de compression sont préférentiellement au coeur de l'épaisseur de la matière au niveau du joint. Elles peuvent présenter différents profils longitudinalement ainsi que transversalement.

L'aube est mise en pression contre la zone du rotor destinée à recevoir l'aube durant l'étape (b). Cette pression est maintenue et préférentiellement augmentée durant l'étape (c). Différents profils de mise en pression peuvent être appliqués durant les étapes (b) et/ou (c).

Selon un mode avantageux de l'invention, la longueur de la surface de contact du support avec la surface interne du rotor suivant l'axe de rotation du rotor est inférieure à 90%, préférentiellement 80%, plus préférentiellement 70%, plus préférentiellement encore 60% et encore plus préférentiellement 50%, de la longueur de la zone de réception de l'aube.

Selon un autre mode avantageux de l'invention, la paroi est généralement symétrique en révolution autour de l'axe de rotation du tambour, définissant un volume intérieur creux.Selon un encore autre mode avantageux de l'invention, la paroi présente au niveau de la zone de réception de l'aube une section longitudinale avec un profil de forme générale en U dont l'ouverture est dirigée vers l'axe de rotation du tambour, le support étant disposé dans la cavité du U.

Selon un encore autre mode avantageux de l'invention, la surface de contact du support avec la surface interne dans la cavité du U présente une longueur suivant l'axe de rotation du tambour qui est inférieure à la longueur de la cavité au niveau de son fond.

Selon un encore autre mode avantageux de l'invention, la paroi forme un voile correspondant à la forme générale du tambour, et présente au niveau de la zone de réception de l'aube une section longitudinale avec un profil comprenant une partie centrale surélevée par rapport au voile et au moins une partie raidisseur reliant latéralement la partie centrale au voile, le support étant disposé sur la surface interne de la partie centrale.

Selon un encore autre mode avantageux de l'invention, la ou au moins une des parties raidisseur est essentiellement perpendiculaire à l'axe de rotation du tambour ou forme un angle moyen avec une direction perpendiculaire audit axe qui est inférieur à 60°, préférentiellement 50°, plus préférentiellement encore 40°.

Selon un encore autre mode avantageux de l'invention, la paroi comprend deux parties raidisseur latéralement de chaque côté de la partie centrale surélevée, la partie centrale débordant d'au moins une des deux parties raidisseur de manière à former une section de forme générale en π (lettre grecque PI).

Selon un encore autre mode avantageux de l'invention, la surface extérieure de la partie centrale surélevée délimite la veine fluide et est généralement lisse, préférentiellement généralement cylindrique, conique ou de forme bombée sur la longueur de ladite surface selon l'axe de rotation.

Selon un encore autre mode avantageux de l'invention, la zone de réception de l'aube est formée par une excroissance de la surface extérieure du rotor délimitant la veine fluide, l'excroissance formant une partie inférieure de l'aube finale lorsque l'aube est soudée au rotor, ladite partie inférieure correspondant préférentiellement à au moins 5%, plus préférentiellement 10% de la hauteur de l'aube finale et préférentiellement à moins de 20% de la hauteur de l'aube finale.

Selon un encore autre mode avantageux de l'invention, le support est disposé de manière à ce que sa surface de contact avec la surface interne du rotor soit essentiellement centrée suivant l'axe de rotation du rotor avec la zone de réception de l'aube.

Selon un encore autre mode avantageux de l'invention, le rotor est un tambour comprenant une paroi définissant un volume intérieur creux, la paroi, le support et l'étape (b) étant configurés de manière à ce que l'étape (b) génère une consommation de matière plus importante à hauteur du support.

L'invention a également pour objet un rotor de turbomachine axiale comprenant au moins une rangée d'aubes fixées par soudage par friction au rotor; des remarquable en ce que les aubes sont soudées au rotor via le procédé suivant l'invention, le joint de liaison des aubes au rotor comprend des aubes contraintes de compression au niveau d'au moins une des deux extrémités axiale des aubes, les contraintes de compression étant préférentiellement au coeur de l'épaisseur du joint de liaison. Les contraintes de compression peuvent être présentes en surface ainsi qu'au coeur de la matière. En d'autres termes, les contraintes de compression sont présentes à une distance supérieure à 0.5 mm, préférentiellement 1.0 mm, plus préférentiellement 1.5 mm, de la surface extérieure de l'aube au niveau du joint.

Les contraintes de compression sont supérieures à une valeur de 200 N/mm², préférentiellement 300 N/mm², plus préférentiellement encore 400 N/mm²,

Selon un mode avantageux de l'invention, le joint de liaison de l'aube au rotor comprend des contraintes de traction à sa partie centrale.

Selon un autre mode avantageux de l'invention, les aubes sont soudées au rotor via le procédé suivant l'invention.

### Avantages apportés

L'invention permet d'assurer une liaison optimale des aubes, résultant en un procédé de fabrication de rotor de turbomachine particulièrement avantageux d'un point de vue coût de fabrication.

### Brève description des dessins

La figure 1 est une vue en coupe d'une turbomachine axiale double-flux, comportant plusieurs rotors munis d'aubes fixées potentiellement selon le procédé de l'invention. Elle comprend une vue agrandie en coupe partielle de la partie compresseur basse-pression de la turbomachine, les aubes étant fixées au rotor du compresseur par le procédé et au moyen du dispositif selon l'invention.
La figure 2 est une vue en coupe du tambour du compresseur du détail de la figure 1, illustrant la phase d'assemblage des aubes au tambour.
La figure 3 est une vue en perspective d'une portion de tambour de compresseur des figures 1 et 2, ainsi que d'une aube en mouvement orbital sur une excroissance correspondante du tambour.
La figure 4 illustre une première étape du processus de soudage par friction selon l'invention.
La figure 5 illustre une deuxième étape du processus de soudage par friction selon l'invention.
La figure 6 illustre une troisième étape du processus de soudage par friction selon l'invention.

### Description des modes de réalisation

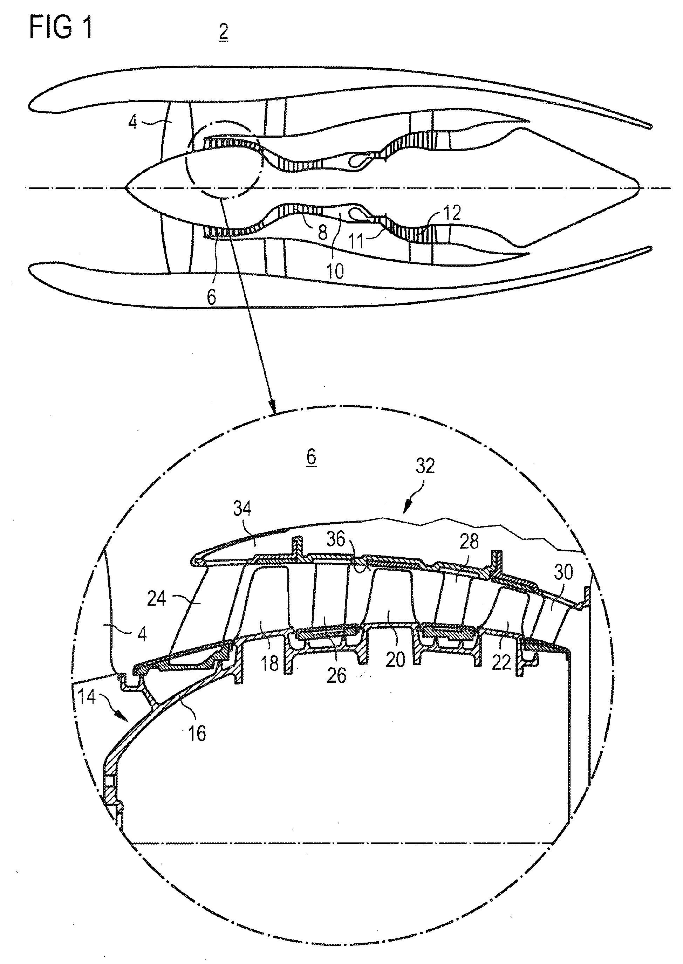

La figure 1 illustre une turbomachine axiale double-flux 2 du type moteur d'avion. Une telle machine comprend successivement depuis son entrée jusqu'à sa sortie : un ventilateur 4 (communément désigné « fan »), un compresseur basse-pression 6, un compresseur haute-pression 8, une chambre de combustion 10, une turbine haute-pression 12 et une turbine basse-pression 13. L'air d'entrée est forcé dans la machine par le ventilateur 4 pour ensuite se diviser en un flux primaire traversant les différents composants principaux sus mentionnés, et un flux secondaire traversant la machine à l'extérieur de ces composants et rejoignant le flux primaire à la sortie en vue de générer la poussée propulsive.

Le compresseur basse-pression 6 illustré en détail dans la partie agrandie de la figure 1 comprend essentiellement un rotor 14 et un stator 32. Le rotor est formé par un voile 16 généralement symétrique en révolution autour de son axe de rotation, le voile 16 étant pourvu de rangées d'aubes rotoriques 18, 20 et 22. Le stator 32 comprend un bec de séparation 34 du flux d'entrée et une paroi 36 délimitant le flux primaire et pourvue de rangées d'aubes statoriques 24, 26, 28 et 30. Les rangées d'aubes statoriques et rotoriques sont disposées en alternance de manière à former plusieurs étages de compression, chaque étage étant formé par un couple d'une rangée d'aubes rotorique et d'une rangée d'aubes statoriques.

Des dispositif d'étanchéité dynamique connus en soi de l'homme de métier sont prévus entres les extrémités des aubes rotoriques 18, 20 et 22 et la paroi 36 délimitant la veine fluide du flux primaire, ainsi qu'entre les extrémités des aubes statoriques 24, 26, 28 et 30 avec le voile 16 du tambour 14.

Le tambour 14 est typiquement fabriqué en matériau métallique tel que par exemple du titane ou de l'acier inoxydable. Sa paroi 16 est en forme générale d'ogive délimitant un volume interne creux. Elle peut être fabriquée par usinage à partir d'une paroi brute formée notamment par forgeage. Ce brut aura un profil et une épaisseur s'approchant au maximum du profil et de l'épaisseur de la paroi finie 16 tel qu'illustrée à la figure 1, et ce afin de minimiser la quantité de matière à enlever et le temps machine associé à cette opération.

Les aubes, notamment les aubes rotoriques, sont fabriquées séparément pour être ensuite fixées à la paroi 16 du tambour 14. En effet, bien qu'il soit bien sûr possible d'usiner les aubes rotoriques directement dans le brut destiné à former le tambour 14, il est cependant souhaitable pour des raisons essentiellement économiques de les fabriquer séparément et de les fixer ensuite à la paroi du tambour. Ceci est d'autant plus vrai lorsque le tambour est de grand diamètre. En effet, dans ce cas, le nombre d'aubes augmente fortement et le temps machine pour leur usinage hors masse deviendrait alors fort élevé, sans compter le coût de matière nécessaire pour le brut de la paroi.

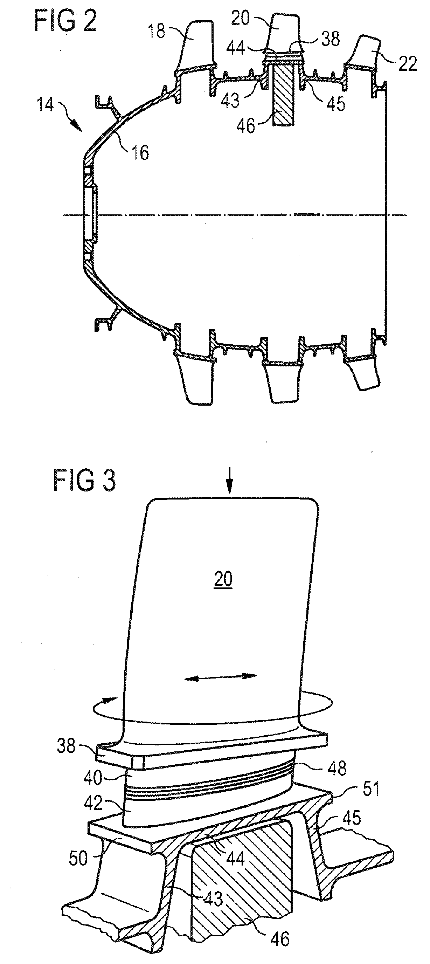

La figure 2 est une vue en coupe du tambour 14 de la figure 1. Elle illustre le processus de fixation des aubes à la paroi du tambour 14.

Le tambour 14 est monobloc, à savoir que sa paroi 16 est formée d'un seul tenant. Les aubes rotoriques sont constituées, chacune, d'une partie basse intégralement formée avec le tambour et une partie haute qui est fixée à la partie basse par un procédé de soudage par friction.

La paroi 16 du tambour 14 comprend un voile définissant la forme générale cylindrique bombée ou encore d'ovale ou d'ogive. Outre le voile, la paroi comprend également des zones destinées à recevoir et supporter les aubes rotoriques. Ces zones présentent une géométrie particulière destinées à optimiser la raideur du rotor ainsi que sa masse.

Le rotor comprend ainsi trois de ces zones construites de manière similaire. La zone de réception de la rangée d'aubes intermédiaires 20 va ainsi être décrite plus en détails en relation avec la figure 3 qui est une vue en perspective d'une portion de la zone de réception d'une aube 20 de la rangée d'aube intermédiaire. Il est à noter que cette description peut s'appliquer également aux autres étages du rotor.

La zone de réception de la rangée d'aubes intermédiaires 20 est de forme annulaire et constituée essentiellement de deux parties de paroi sous forme de nervures 43 et 45 généralement perpendiculaires à l'axe de rotation et d'une partie centrale 44 supportant la rangée d'aubes. La partie centrale 44 est ainsi surélevée par rapport à la paroi avoisinante formant le voile. Cette surélévation dans une direction généralement perpendiculaire à l'axe de rotation et orientée vers l'extérieur du corps creux permet à la surface extérieure de la partie centrale 44 d'être au niveau des surfaces des viroles intérieures avoisinantes (voir détail de la figure 1) délimitant la veine fluide. Ces surfaces des viroles intérieures sont en effet à distance du voile en raison de la hauteur des léchettes et de l'épaisseur nécessaire de la virole. Les surfaces des viroles intérieures et des parties centrales 44 des zones annulaires, qui délimitent la veine fluide sont ainsi généralement compensées et alignées de manière à assurer un écoulement le moins perturbé possible.

La partie centrale 44 de la zone de réception annulaire est généralement de section axiale généralement droite ou légèrement courbée de manière à correspondre à la forme générale de la veine fluide du rotor. Cette partie centrale présente une forme généralement annulaire avec les pieds d'aubes 42 intégralement formés avec elle. Elle présente une longueur, selon une direction longitudinale, qui est légèrement supérieure à la largeur dans cette direction des pieds d'aube avec leurs congés de raccordement. La partie centrale 44 constitue ainsi une plateforme généralement annulaire pour la rangée d'aubes. Les parties latérales amont 43 et aval 45 sous forme de nervures relient cette plateforme au reste du voile. La zone annulaire supportant les aubes forme ainsi une cavité annulaire à l'intérieur du corps creux et ouverte vers ce dernier, en direction de l'axe de rotation. La section de la zone annulaire dans un plan passant par l'axe de rotation présente un profil généralement en « U » dont l'ouverture est dirigée vers l'axe de rotation.

Les jonctions des parties latérales amont 43 et aval 45 avec la partie centrale 44 sont telles qu'elles sont à distance des extrémités respectives 50 et 51 de la plateforme formée par la partie centrale 44. La jonction de la partie amont 43 avec la partie centrale 44 est approximativement à l'aplomb (selon une perpendiculaire à l'axe de rotation) du bord d'attaque de l'aube, plus précisément à l'aplomb de l'intersection du bord d'attaque de l'aube avec la plateforme. Il en va de même pour la partie de paroi aval avec le bord de fuite de l'aube. La plateforme formée par la partie centrale présente ainsi un bord 50 en saillie côté amont et pareillement un bord 51 en saillie côté aval. Cette construction permet d'optimiser la reprise des efforts centrifuges exercés par les aubes. En effet, la massivité des aubes est présente sur toute leur largeur, si bien que le fait de prévoir la retenue de la plateforme à distance de ses bords amont et aval permet d'éviter une concentration de contraintes défavorable au niveau du congé de raccordement. De plus, ces mesures de construction ménagent une certaine place entre le bord amont et le voile, et pareillement entre le bord aval et le voile, cette place permettant de rapprocher les rangées d'aubes rotoriques et statoriques, respectivement, ce qui allège considérablement le poids total du compresseur.

Les parties de paroi amont 43 et aval 45 de la zone annulaire sont en saillie du voile vers l'intérieur du corps creux, formant ainsi des nervures internes au corps creux. Elles contribuent au renforcement du rotor et présentent l'avantage que leur massivité est quelque peu en retrait du voile et donc plus proche de l'axe de rotation.

L'aube 20 comprend une plateforme 38 à proximité de l'extrémité de l'aube destinée à être soudée au tambour. La plateforme 38 sert essentiellement de moyen de préhension et de positionnement de l'aube notamment dans un plan parallèle au plan du mouvement de friction. De manière préférentielle, une excroissance 40 est prévue sous la plateforme 38, c'est-à-dire du côté de la plateforme qui est destiné à être soudé au tambour. Cette excroissance 40 présente une section dont le profil correspond essentiellement à un profil d'aube. Cette excroissance présente une surface frontale qui est mise en contact avec une surface frontale correspondante de l'excroissance 42 de la zone de réception.

Un support 46 est disposé sous la zone de réception de l'aube, plus précisément sous la partie centrale 44 de la zone de réception dans l'exemple qui nous intéresse ici. Ce support est généralement massif et a pour objectif de s'opposer à la déformation de la partie centrale 44 sous l'effort de pression de l'aube 20 qui est exercé durant l'opération de soudage par friction. Le support est disposé dans la cavité formée par les parties latérales amont 43 et aval 45 et la partie centrale 44 de la zone de réception de l'aube. La surface de contact du support est plus courte, selon l'axe de rotation du tambour, que la longueur de l'aube 20 et/ou la longueur de l'excroissance 42.

Le support peut être mis en place par divers moyens directement accessibles à l'homme de métier.

L'aube et, partant, la surface frontale de l'excroissance 40 de la plateforme 38 sont mises en mouvement selon une trajectoire linéaire, orbitale ou autre encore de manière à ce que ladite surface reste majoritairement en contact avec la surface correspondante sus mentionnée. L'orientation générale de l'aube reste constante. Ce mouvement est accompagné d'une mise en pression des surfaces de contact de manière à générer un échauffement homogène de toute l'interface grâce à une vitesse tangentielle uniforme. Cet échauffement génère ainsi une zone de soudage 48. La présence du support 46 va empêcher le déformation de la partie centrale de l'interface côté tambour alors que les extrémités de ladite interface vont pouvoir se déformer sous l'effort de pression de l'aube vers le tambour. Il en résulte ainsi une pression plus importante au niveau du support 46 et, partant, une consommation de matière (qui est intrinsèque au processus de soudage par friction) plus importante. Une fois la température désirée atteinte, le mouvement est stoppé dans une position de référence et un effort de forgeage est exercé sur l'aube vers le tambour afin de former la soudure. Lorsque l'effort de pression de l'aube vers le tambour est annulé, les extrémités avant et arrière de l'interface côté tambour vont se déformer dans une position déterminée par l'équilibre des efforts et ainsi générer des contraintes résiduelles de compression. Ce phénomène peut par ailleurs être renforcé par une contraction plus importante de la partie centrale qui aura subi un échauffement plus important.

Après soudure, un usinage est ensuite nécessaire afin d'enlever la matière de l'interface qui aura été repoussée vers l'extérieur (appelée communément « flash ») ainsi que pour enlever la plateforme. Cet usinage est préférentiellement adaptatif, à savoir qu'il s'adapte à la surface de l'aube ainsi formée au voisinage de la soudure de manière à éviter tout ressaut lié à l'usinage.

Il est à noter que la présence de l'excroissance 40 sous la plateforme est optionnelle compte tenu de l'opération d'usinage qui s'ensuit.

Il est à également à noter que la présence de l'excroissance 42 sur le tambour est également optionnelle. Elle facilite cependant l'opération d'usinage qui s'ensuit.

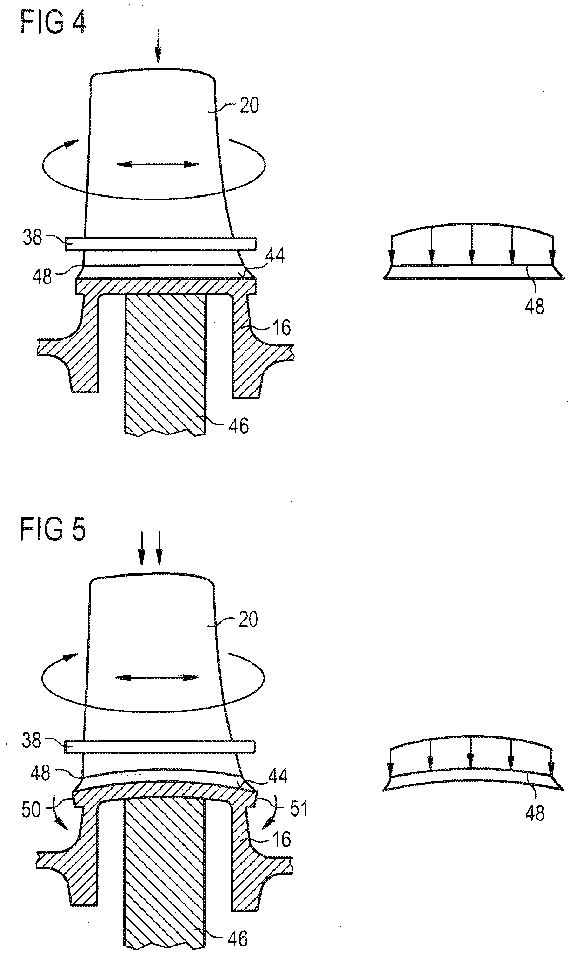

Le phénomène de génération de contraintes résiduelles va être décrit plus en détails en relation avec les figures 4, 5 et 6.

La figure 4 illustre une vue en coupe d'une portion de la paroi 16 du tambour où l'aube 20 à souder est mise en mouvement de friction et est également mise progressivement en pression vers le tambour. Il s'agit de la première étape du processus de soudage par friction. Durant cette étape, la pression de contact entre les deux surfaces n'est pas homogène du fait du déplacement constant de l'aube 20 sur la paroi 16 du tambour. En raison de la présence du support 46, la partie centrale de la zone de réception de l'aube ne se déforme pas ou moins que les parties latérales. Il en résulte une pression plus importante au centre (qui correspond au support 46) qu'aux bords. Cette différence de pression est illustrée au schéma illustrant le profil de pression à la figure 4. Le surcroit de pression au centre va augmenter la consommation de matière qui est, par ailleurs, un phénomène intrinsèque du processus de soudage par friction. Il y aura donc d'avantage de consommation de matière au centre. Cette augmentation de consommation de matière va permettre une compensation au moins partielle de la différence de pression entre le centre et les bords. La nouvelle distribution des efforts va avoir pour effet de faire fléchir les extrémités de la zone de réception de l'aube. Cette flexion est illustrée à la figure 5 par les flèches à proximité des bords 50 et 51.

La figure 5 illustre la deuxième étape de soudage par friction. Durant cette étape, la pression de l'aube vers le tambour s'homogénéise progressivement jusqu'à obtenir un profil de pression de contact constant le long de l'interface du fait de la déformation du support. Ce profil de pression est illustré à la droite de la représentation de la portion de paroi 16 et de l'aube.

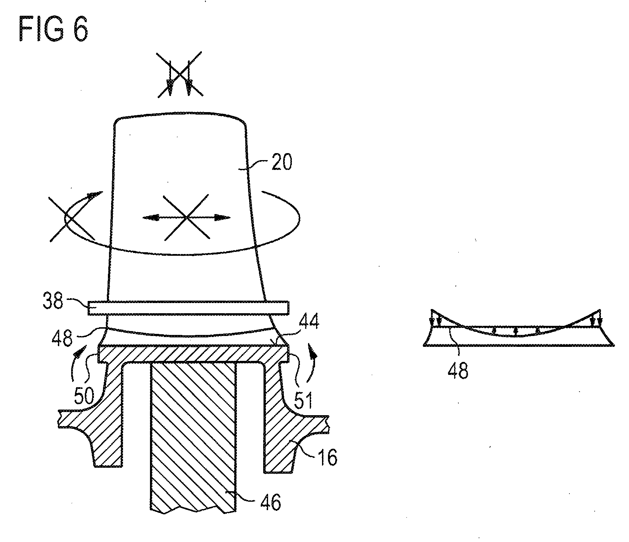

La figure 6 illustre la portion de paroi 16 du tambour et l'aube 20 des figures 4 et 5 après le processus de soudage. Une fois l'aube immobilisée, la zone de liaison 48 se refroidit, la pression se relâche, et les bords de la zone de réception de l'aube remontent. Cette remontée va faire naître des contraintes de compression aux extrémités.

De manière générale, il est à noter que le support est préférentiellement centré sur la longueur (selon une direction axiale) de la zone de réception de l'aube. Notamment en fonction de la conception du tambour ou rotor, il pourra être avantageux de décentrer le support afin de concentrer d'avantage de contraintes résiduelles et/ou de les concentrer à une extrémité choisie, préférentiellement celle correspondant au bord d'attaque de l'aube.

Encore de manière générale, il est à noter que les pieds d'aubes ne doivent pas nécessairement être intégralement formés avec le rotor. En effet, il est tout-à-fait envisageable de prévoir la zone de réception lisse, éventuellement pourvue d'un orifice destiné à assurer ou renforcer la fixation des aubes par la suite. Les aubes peuvent en effet être simplement soudées à leurs pieds à la zone support, à fleur de la surface extérieure de la partie centrale. Les aubes peuvent également présenter à leurs pieds une surface assimilable à une plateforme de fixation destinée à être soudée.

Il est également à noter que la paroi du rotor ne doit pas nécessairement être construite en une seule pièce. En effet, il peut même être souhaitable de prévoir plusieurs tronçons destinés à être assemblés. Une telle construction permet de faire un gain substantiel de matière à usiner car elle permet une première mise à forme par forgeage qui sera sensiblement plus proche de la forme définitive. Il en résulte une diminution de perte de matière enlevée par usinage ainsi qu'une diminution du temps d'usinage.

## Revendications

1. Procédé de soudage par friction d'aubes à un rotor de turbomachine axiale, comprenant les étapes suivantes :
(a) mise en position du rotor (14) ;
(b) mise en mouvement de friction, préférentiellement orbital, d'une des aubes (20) contre une zone (42) du rotor destinée à recevoir ladite aube, de manière à atteindre une température de soudage;
(c) immobilisation de l'aube (20) par rapport au rotor (14) et forgeage de l'aube (20) contre le rotor (14) de manière à obtenir un joint de liaison (48) entre l'aube (20) et le rotor (14) ;
**caractérisé en ce que**
le rotor est un tambour (14) ou un étage de tambour comprenant une paroi (16) définissant un volume intérieur creux, et les étapes (b) et (c) sont menées avec la présence d'un support (46) sur une surface interne du tambour (14) opposée à la zone de réception (42) de l'aube (20), la longueur de la surface de contact du support (46) avec la surface interne du tambour suivant l'axe de rotation du tambour étant inférieure à la longueur de la zone de réception (42) de l'aube, de manière à générer après refroidissement et relâchement de la pression une concentration de contrainte de compression au coeur de l'épaisseur du joint de liaison (48) à au moins une extrémité axiale dudit joint.

2. Procédé suivant la revendication 1, **caractérisé en ce que** la longueur de la surface de contact du support (46) avec la surface interne du rotor suivant l'axe de rotation du rotor est inférieure à 90%, préférentiellement 80%, plus préférentiellement 70%, plus préférentiellement encore 60% et encore plus préférentiellement 50%, de la longueur de la zone de réception (42) de l'aube (20).

3. Procédé suivant l'une des revendications 1 et 2, **caractérisé en ce que** la paroi (16) est généralement symétrique en révolution autour de l'axe de rotation du tambour.

4. Procédé suivant la revendication 3, **caractérisé en ce que** la paroi (16) présente au niveau de la zone de réception (42) de l'aube une section longitudinale avec un profil de forme générale en U dont l'ouverture est dirigée vers l'axe de rotation du tambour, le support étant disposé dans la cavité du U.

5. Procédé suivant la revendication 4, **caractérisé en ce que** la surface de contact du support (46) avec la surface interne dans la cavité du U présente une longueur suivant l'axe de rotation du tambour qui est inférieure à la longueur de la cavité au niveau de son fond.

6. Procédé suivant l'une des revendications 3 à 5, **caractérisé en ce que** la paroi (16) forme un voile correspondant à la forme générale du tambour, et présente au niveau de la zone de réception (42) de l'aube une section longitudinale avec un profil comprenant une partie centrale (44) surélevée par rapport au voile et au moins une partie raidisseur (43, 45) reliant latéralement la partie centrale (44) au voile, le support (46) étant disposé sur la surface interne de la partie centrale (44).

7. Procédé suivant la revendication 6, **caractérisé en ce que** la ou au moins une des parties raidisseur (43, 45) est essentiellement perpendiculaire à l'axe de rotation du tambour ou forme un angle moyen avec une direction perpendiculaire audit axe qui est inférieur à 60°, préférentiellement 50°, plus préférentiellement encore 40°.

8. Procédé suivant la revendication 7, **caractérisé en ce que** la paroi comprend deux parties raidisseur (43, 45) latéralement de chaque côté de la partie centrale (44), la partie centrale (44) débordant d'au moins une des deux parties raidisseur (43, 45) de manière à former une section de forme générale en π.

9. Procédé selon l'une des revendications 6 et 7, **caractérisé en ce que** la surface extérieure de la partie centrale surélevée (44) délimite la veine fluide et est généralement lisse, préférentiellement généralement cylindrique, conique ou de forme bombée sur la longueur de ladite surface selon l'axe de rotation.

10. Procédé suivant l'une des revendications 1 à 9, **caractérisé en ce que** la zone de réception (42) de l'aube (20) est formée par une excroissance (42) de la surface extérieure du rotor délimitant la veine fluide, l'excroissance formant une partie inférieure de l'aube finale lorsque l'aube est soudée au rotor, ladite partie inférieure correspondant préférentiellement à au moins 5%, plus préférentiellement 10% de la hauteur de l'aube finale et préférentiellement à moins de 20% de la hauteur de l'aube finale.

11. Procédé suivant l'une des revendications 1 à 10, **caractérisé en ce que** le support (46) est disposé de manière à ce que sa surface de contact avec la surface interne du rotor (14) soit essentiellement centrée avec la zone de réception de l'aube suivant la direction de l'axe de rotation du rotor.

12. Procédé suivant l'une des revendications 1 à 11, **caractérisé en ce que** le rotor est un tambour (14) comprenant une paroi (16) définissant un volume intérieur creux, la paroi, le support (46) et l'étape (b) étant configurés de manière à ce que l'étape (b) génère une consommation de matière plus importante à hauteur du support (46).

13. Rotor (14) de turbomachine axiale comprenant au moins une rangée d'aubes (18, 20, 22) fixées au rotor par soudage par friction au rotor via un joint de liaison (48) ;
**caractérisé en ce que**
les aubes (18, 20, 22) sont soudées au rotor (14) via le procédé suivant l'une des revendications 1 à 12, le joint de liaison (48) des aubes (20) au rotor (14) comprenant des contraintes de compression au niveau d'au moins une des deux extrémités axiale des aubes, les contrainte de compression étant au coeur de l'épaisseur du joint de liaison.

14. Rotor suivant la revendication 13, **caractérisé en ce que** le joint de liaison (48) de l'aube (20) au rotor (14) comprend des contraintes de traction à sa partie centrale.

## Patentansprüche

1. Verfahren für das Reibschweißen von Laufradschaufeln an einen Rotor einer axialen Turbomaschine, welches die folgenden Schritte beinhaltet:
(a) Positionieren des Rotors (14);
(b) Beginn des vorzugsweise orbitalen Reibens einer der Laufradschaufeln (20) gegen einen Bereich (42) des Rotors, der für die Aufnahme der genannten Laufradschaufel bestimmt ist, um eine Schweißtemperatur zu erreichen;
(c) Festsetzen der Laufradschaufel (20) im Verhältnis zum Rotor (14) und Schmieden der Laufradschaufel (20) an den Rotor (14), um eine Verbindungsstelle (48) zwischen der Laufradschaufel (20) und dem Rotor (14) herzustellen;
**dadurch gekennzeichnet, dass**
der Rotor eine Trommel (14) oder eine Trommelstufe mit einer Wandung (16) ist, die einen hohlen Innenraum umschreibt und die Schritte (b) und (c) mit Vorhandensein einer Stütze (46) auf einer Innenfläche der Trommel (14) ausgeführt werden, die dem Bereich für die Aufnahme (42) der Laufradschaufel (20) gegenüberliegt, wobei die Länge der Kontaktoberfläche der Stütze (46) mit der Innenseite der Trommel entlang der Rotationsachse der Trommel geringer ist, als die Länge des Bereichs für die Aufnahme (42) der Laufradschaufel, um nach dem Abkühlen und dem Lösen des Drucks eine Konzentration der Kompressionsbeanspruchung im Kern der Dicke der Verbindungsstelle (48) an mindestens einem axialen Ende der genannten Verbindungsstelle zu erzeugen.

2. Verfahren gemäß Patentanspruch 1, **dadurch gekennzeichnet, dass** die Länge der Kontaktoberfläche der Stütze (46) mit der Innenfläche des Rotors entlang der Rotationsachse des Rotors weniger als 90%, bevorzugt 80%, noch stärker bevorzugt 70%, noch stärker bevorzugt 60% und noch stärker bevorzug 50% der Länge der Zone für die Aufnahme (42) der Laufradschaufel (20) beträgt.

3. Verfahren gemäß einem der Patentansprüche 1 und 2, **dadurch gekennzeichnet, dass** die Wandung (16) im Allgemeinen rotationssymmetrisch um die Rotationsachse der Trommel herum verläuft.

4. Verfahren gemäß Patentanspruch 3, **dadurch gekennzeichnet, dass** die Wandung (16) im Bereich des Bereichs für die Aufnahme (42) der Laufradschaufel einen Abschnitt in Längsrichtung aufweist, dessen Profil der allgemeinen Form eines U entspricht, dessen Öffnung zur Rotationsachse der Trommel weist, wobei die Stütze in der Vertiefung des U angeordnet ist.

5. Verfahren gemäß Patentanspruch 4, **dadurch gekennzeichnet, dass** die Kontaktoberfläche der Stütze (46) mit der Innenseite in der Vertiefung des U eine Länge in Richtung der Rotationsachse der Trommel aufweist, die geringer ist, als die Länge der Vertiefung an deren Boden.

6. Verfahren gemäß einem der Patentansprüche 3 bis 5, **dadurch gekennzeichnet, dass** die Wandung (16) eine Hülle bildet, die der allgemeinen Form der Trommel entspricht und im Bereich des Bereichs für die Aufnahme (42) der Laufradschaufel einen längsgerichteten Abschnitt mit einem Profil aufweist, das einen mittleren Teil (44) umfasst, der im Verhältnis zur Hülle überhöht ist und mindestens einen versteifenden Teil (43, 45), der den mittleren Teil (44) mit der Hülle verbindet, wobei die Stütze (46) auf der Innenfläche des mittleren Teils (44) angeordnet ist.

7. Verfahren gemäß Patentanspruch 6, **dadurch gekennzeichnet, dass** der oder mindestens einer der versteifenden Teile (43, 45) im wesentlichen rechtwinklig zur Rotationsachse der Trommel angeordnet ist, oder einen mittleren Winkel mit einer rechtwinklig zur genannten Achse verlaufenden Richtung bildet, der kleiner als 60°, bevorzugt 50° und noch stärker bevorzugt 40° beträgt.

8. Verfahren gemäß Patentanspruch 7, **dadurch gekennzeichnet, dass** die Wandung zwei versteifende Teile (43, 45) aufweist, die seitlich an jeder Seite des mittleren Teils (44) angeordnet sind, wobei der mittlere Teil (44) mindestens einen der beiden versteifenden Teile (43, 45) überragt, um einen Abschnitt zu bilden, der die allgemeine Form eines π besitzt.

9. Verfahren gemäß einem der Patentansprüche 6 und 7, **dadurch gekennzeichnet, dass** die äußere Oberfläche des überhöhten mittleren Teils (44) den Fluidstrom begrenzt und auf der Länge der genannten Oberfläche in der Rotationsachse im Allgemeinen glatt, bevorzugt allgemein zylindrisch, konisch oder gewölbt ist.

10. Verfahren gemäß einem der Patentansprüche 1 bis 9, **dadurch gekennzeichnet, dass** der Bereich für die Aufnahme (42) der Laufradschaufel durch eine Ausbuchtung (42) auf der äußeren Oberfläche des Rotors gebildet wird, welche den Fluidstrom begrenzt, wobei die Ausbuchtung einen unteren Teil der fertigen Laufradschaufel bildet, wenn die Laufradschaufel an den Rotor angeschweißt ist, wobei der genannte untere Teil bevorzugt mindestens 5%, stärker bevorzugt 10% der Höhe der fertigen Laufradschaufel und bevorzugt weniger als 20% der Höhe der fertigen Laufradschaufel entspricht.

11. Verfahren gemäß einem der Patentansprüche 1 bis 10, **dadurch gekennzeichnet, dass** die Stütze (46) in der Weise angeordnet ist, dass ihre Kontaktfläche mit der inneren Oberfläche des Rotors (14) im Wesentlichen mit dem Bereich für die Aufnahme der Laufradschaufel in Richtung der Rotationsachse des Rotors zentriert wird.

12. Verfahren gemäß einem der Patentansprüche 1 bis 11, **dadurch gekennzeichnet, dass** der Rotor eine Trommel (14) ist, die eine Wandung (16) besitzt, die einen hohlen Innenraum umschreibt, wobei die Wandung, die Stütze (46) und Schritt (b) in der Weise konfiguriert werden, dass Schritt (b) einen stärkeren Materialverbrauch in Höhe der Stütze (46) erzeugt.

13. Rotor (14) einer axialen Turbomaschine, die mindestens eine Reihe von Laufradschaufeln (18, 20, 22) besitzt, die mittels Reibschweißverfahren anhand einer Verbindungsstelle (48) am Rotor befestigt sind;
**dadurch gekennzeichnet, dass**
die Laufradschaufeln (18, 22, 22) anhand des Verfahrens gemäß einem der Patentansprüche 1 bis 12 an den Rotor (14) angeschweißt werden, wobei die Verbindungsstelle (48) der Laufradschaufeln (20) mit dem Rotor (14) Kompressionsbeanspruchungen im Bereich von mindestens einem der beiden axialen Enden der Laufradschaufeln beinhaltet, wobei sich die Kompressionsbeanspruchungen im Kern der Dicke der Verbindungsstelle befinden.

14. Rotor gemäß Patentanspruch 13, **dadurch gekennzeichnet, dass** die Verbindungsstelle (48) der Laufradschaufel (20) mit dem Rotor (14) Zugbeanspruchungen in ihrem mittleren Teil beinhaltet.

## Claims

1. Process for friction welding of blades to a rotor of an axial turbomachine, comprising the following steps:
(a) positioning the rotor (14);
(b) initiation of a frictional movement, preferably orbital, of one of the blades (20) against an area (42) of the rotor designed to receive the said blade, so as to achieve a welding temperature;
(c) immobilization of the blade (20) relative to the rotor (14) and forging of the blade (20) against the rotor (14) to obtain a bond (48) between the blade (20) and the rotor (14);
wherein
the rotor is a drum (14) or a stage of a drum comprising a wall (16) defining a hollow interior volume, and steps (b) and (c) are carried out with a support (46) on an inner surface of the drum (14) opposite the area (42) receiving the blade (20), the length of the contact surface of the support (46) with the inner surface of the drum along the rotation axis of the drum being less than the that of the area (42) receiving the blade, so as to generate, after cooling and slackening of the pressure, a compressive stress concentration at the heart of the thickness of the bond (48) located at least at one axial end of the said joint.

2. Process in accordance with Claim 1, wherein the length of the contact surface of the support (46) with the inner surface of the rotor axis along its axis of rotation is less than 90%, preferably 80%, more preferably 70%, even more preferably 60% and even more preferably 50%, of the length of the area (42) receiving the blade (20).

3. Process in accordance with one of Claims 1 and 2, wherein the wall (16) is generally symmetrical in revolution around the axis of rotation of the drum.

4. Process in accordance with Claim 3, wherein the wall (16) at the area (42) receiving the blade has a longitudinal section with a generally U-shaped profile, the opening of which is directed towards the axis of rotation of the drum, the support being located in the cavity of the U.

5. Process in accordance with Claim 4, wherein the surface of the support (46) in contact with the internal surface U-shaped cavity has a length along the axis of rotation of the drum which is less that the length of the cavity at its base.

6. Process in accordance with one of Claims 3 to 5, wherein the wall (16) is in the form of a web with a generally drum-shaped profile and has, at the area (42) receiving the blade, a longitudinal section with a profile comprising a central part (44) raised relative to the web and at least one stiffening part (43, 45) connecting laterally to the central part (44) of the web, the support (46) being located on internal surface of the central part (44).

7. Process in accordance with Claim 6, wherein at least one of the stiffening parts (43, 45) is substantially perpendicular to the axis of rotation of the drum or forms a mean angle with a direction perpendicular to the said axis which is less than 60°, preferentially 50°, more preferably 40°.

8. Process in accordance with Claim 7, wherein the wall comprises two stiffener portions (43, 45) laterally on either side of the central part (44), the central part (44) projecting from at least one of the two stiffening parts (43, 45) to form a generally IT-shaped section.

9. Process in accordance with one of Claims 6 and 7, wherein the outer surface of the central raised part (44) delimits the fluid stream and is generally smooth, preferably generally cylindrical, conical or convex-shaped along the length of the said surface along the axis of rotation.

10. Process in accordance with one of Claims 1 to 9, wherein the area (42) receiving the blade (20) is formed by a projection (42) of the outer surface of the rotor delimiting the fluid stream, the projection forming a lower portion of the blade end when the blade is welded to the rotor, the said lower portion corresponding preferably at least 5%, more preferably 10% of the height of the blade end, preferably less than 20% of the height of the blade end.

11. Process in accordance with Claims 1 to 10, wherein the support (46) is located so that its contact surface with the inner surface of the rotor (14) is substantially centred with the area (42) receiving the blade in the direction of the axis of rotation of the rotor.

12. Process in accordance with one of Claims 1 to 11, wherein the rotor is a drum (14) comprising a wall (16) defining a hollow interior volume, the wall, the support (46) and step (b) being configured wherein more material is used at the support (46) in step (b).

13. Rotor (14) of an axial turbomachine comprising at least one row of blades (18, 20, 22) fixed to the rotor by friction welding to the rotor via a bond (48);
wherein
the blades (18, 20, 22) are welded to the rotor (14) using the foregoing process in accordance with one of Claims 1 to 12, the bond (48) between the blades (20) and the rotor (14) comprising compressive stresses at one or both of the two axial ends of the blades, the compressive stress being in the centre of the thickness of the connecting joint.

14. Rotor in accordance with Claim 13, wherein the bond (48) between the blade (20) and the rotor (14) comprises tensile stresses at its central part.
